# EUROPÄISCHE PATENTSCHRIFT

(11) **EP 1 828 624 B1**
(45) Veröffentlichungstag und Bekanntmachung des Hinweises auf die Patenterteilung: **16.02.2011**
(21) Anmeldenummer: 05821721.7
(22) Anmeldetag: 19.12.2005
(51) Int. Cl.: F16B 7/04, F16B 7/18

(54) **VERBINDUNGSELEMENT**
CONNECTION ELEMENT
ELEMENT DE RACCORDEMENT

(30) Priorität: 21.12.2004 DE 202004019675 U
(43) Veröffentlichungstag der Anmeldung: 05.09.2007
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Draudt, Axel Hermann Christian
(86) Internationale Anmeldenummer: PCT/EP2005/013640
(87) Internationale Veröffentlichungsnummer: WO 2006/066841

(56) Entgegenhaltungen:
- EP-A- 0 490 086
- DE-A1- 3 832 691
- FR-A- 2 442 985

## Beschreibung

Die Erfindung betrifft ein Verbindungselement für eine Verbindung zweier an ihren Außenflächen jeweils mindestens eine hinterschnittene Längsnut aufweisender Profilstäbe, mit ersten und zweiten Verbindungsteilen, die in den Längsnuten verankerbar sind, und mit einer Spanneinrichtung zum Festklemmen der verbindungsteile (DE 38 32 691 A1).

Derartige Verbindungselemente sind bekannt. So beschreibt zum Beispiel die EP 0 490 086 A1 eine Schraubverbindung für mindestens zwei lösbar miteinander zu verbindende Teile, insbesondere mit Längsnuten versehene Profilstäbe. Diese Schraubverbindung enthält eine Verbindungsschraube, die mit ihrem Gewindeschaft durch eine im ersten Verbindungsteil vorhandene Durchstecköffnung hindurchzustecken sowie in eine im zweiten Verbindungsteil vorhandene Innengewindebohrung einzudrehen ist und mit ihrem über den Gewindeschaft vorspringenden Kopf hinter den am ersten Verbindungsteil vorhandenen Rand der Durchstecköffnung greift. Dabei ist das erste Verbindungsteil als Spannkörper ausgebildet, auf dem eine quer zur Verbindungsschraube angeordnete Spannschraube und eine dadurch zu verstellende, keilförmig unter den Kopf der Verbindungsschraube greifende Spannbacke gelagert sind. Wie insbesondere aus den Figuren 6, 7 und 8 dieser Druckschrift hervorgeht, benötigt diese Schraubverbindung zwei Schrauben, wovon sich eine in Längsrichtung einer Nut erstrecken muß.

Dadurch ist die Einsetzbarkeit dieser Schraubverbindung stark eingegrenzt, da in Abhängigkeit von der Position der in Längsrichtung der Nut verlaufenden Schraube ein sehr langes Werkzeug verwandt werden muß. Die Position dieser Schraubverbindung ist daher quasi abhängig von der Größe des zu verwendenden Werkzeugs.

Der Erfindung liegt daher die Aufgabe zugrunde, ein Verbindungselement der eingangs genannten Art anzugeben; das mit technisch einfachen Mitteln an jeder beliebigen Position leicht und schnell angebracht werden kann.

Diese Aufgabe wird durch die Merkmale des Anspruch 1 gelöst.

Der Kern der Erfindung besteht darin, daß die Verbindungsteile des Verbindungselements an jeder beliebigen Position der Längsnuten verankert und mit Hilfe der mittels der Spannschraube relativ zueinander bewegbaren Halbschalen zur Herstellung einer festen Verbindung fest verspannt werden können. Durch das Aufeinanderzubewegen der beiden Halbschalen schieben sich die Spannschrägen auf die Spannvorsprünge und ziehen somit die Verbindungsteile bezüglich der Profile fest nach außen. Da sich das Verbindungselement zwischen den beiden miteinander zu verbindenden Profilstäben befindet, ist die Spannschraube immer leicht zugänglich. Des weiteren ermöglichen die Spannschrägen und Spannvorsprünge einen größeren Toleranzausgleich. Hinzukommt, daß nur eine einzige Schraube der Fixierung dient.

Gemäß einer Weiterbildung der Erfindung ist es vorgesehen, daß die ersten und zweiten Verbindungsteile erste und zweite Verankerungskörper aufweisen, die in den jeweiligen Längsnuten festsetzbar sind.

Es gibt zwar die Möglichkeit, die Verankerungskörper in etwa in Form der Längsnut auszugestalten und die Verbindungsteile bzw. deren Verankerungskörper an einer offenen Stirnseite des Profilstabs einzuführen und so weit zu verschieben, bis die gewünschte Position erreicht ist. Vorteilhafter ist es aber, wenn jeder Verankerungskörper langgestreckt ausgebildet ist mit einer Breite, die geringer ist als die Lichtweite der Öffnung der Längsnut. Das ermöglicht ein einfaches-Einführen der Verankerungskörper an der Verbindungsposition. Des weiteren ist es vorteilhafterweise vorgesehen, daß jeder Verankerungskörper in Draufsicht einen parallelogrammförmigen Querschnitt aufweist. Dadurch ist es möglich, daß zwei einander gegenüberliegende Seiten dieses Parallelogramms zur Anlage an die inneren Nutenränder gebracht werden können.

Da die Längsnuten häufig im Querschnitt gesehen pilzkopfförmig ausgebildet sind, ist es vorteilhaft, wenn jeder Verankerungskörper zu seinen jeweiligen Enden hin konisch zuläuft.

Selbstverständlich können die Halbschalen beliebige Formen aufweisen. Besonders vorteilhaft ist es allerdings, wenn die Halbschalen jeweils halbzylinderförmig ausgebildet sind und jeweils quer zum Zylindermantel verlaufende erste und zweite Aufnahmeöffnungen für die Spannschraube aufweisen. Dadurch ist es unter anderem auch möglich, die Verbindungsteile in jeder beliebigen Winkelposition zueinander und somit auch die Profilstäbe in jeder beliebigen Winkelposition zueinander auszurichten.

In diesem Fall ist es auch noch vorteilhaft, wenn die Aufnahmeöffnung der ersten Halbschale mit einem Innengewinde und die Aufnahmeöffnung der zweiten Halbschale mit einer Absenkung zur Aufnahme des Kopfes der Spannschraube versehen sind.

Damit durch die Spannschraube aufgebrachte Kräfte noch besser von den Halbschalen aufgenommen werden können, ist es vorteilhaft, wenn jede Halbschale im Bereich der Aufnahmeöffnung mit ersten und zweiten Verstärkungsstegen versehen ist.

Eine Möglichkeit der Anbringung des Verbindungselements besteht darin, zunächst die Verbindungsteile in die Längsnuten einzubringen und zu fixieren und anschließend die beiden Halbschalen daran anzusetzen und mit der Spannschraube festzuziehen. Wenn jedes Verbindungsteil mit ersten und zweiten Bewegungshebeln versehen ist, die fest oder lösbar angeordnet sind, können die Verbindungsteile zusammen mit den Halbschalen und der Spannschraube als Hauptmontageeinheit zur Verbindung der beiden Profilstäbe verwandt werden. Dabei ist es dann lediglich notwendig, die Verankerungskörper jeweils in die Längsnut einzustecken und mit Hilfe dieses Bewegungshebels in die Befestigungsposition zu verschwenken. Auch ein Lösen dieses Verbindungselements wird dadurch wesentlich erleichtert.

Eine besonders einfache und dennoch sichere Verriegelung der Festklemmposition der Verankerungskörper wird dann gegeben, wenn die Bewegungshebel mit entsprechenden ersten und zweiten Endstücken an den aufeinander zu weisenden Abschnitten der Verbindungsteile angeordnet und derart geformt und ausgebildet sind, daß sie bei Einnahme der Festklemmposition der Verbindungsteile in den Nuten verriegelnd eingreifen. Das hat noch den zusätzlichen Vorteil, daß die Verankerungskörper zwar an der für sie bestimmten Position innerhalb der Nuten fixiert werden können, zur endgültigen Ausrichtung der beiden zu verbindenen Profilstäbe diese noch bis zur gewünschten Position verschwenkt werden können, wenn die Feststellschraube ein wenig gelöst ist. Erst wenn die gewünschte Position erreicht ist, kann dann die Feststellschraube angezogen und somit die Position der beiden Profilstäbe zueinander fixiert werden.

Gemäß einer Weiterbildung der Erfindung ist es vorgesehen, daß sich an den entsprechenden Endstücken seitlich betrachtet erste und zweite U-förmige Mittelstücke anschließen, an denen wiederum sich erste und zweite Griffstücke anschließen, die in der Verriegelungsstellung mit der Außenoberfläche der Profilstäbe in etwa abschließen oder fluchten. Dadurch ist es möglich, das gesamte Mittelstück in der Nut zu versenken und nur noch das Griffstück für ein Lösen der Verriegelung zugänglich zu machen.

Einen zusätzlichen Halt erfahren die Bewegungshebel dann, wenn die Endstücke durch an den Verbindungsteilen vorhandene Schlitze eingesteckt sind.

Dabei kann auch noch vorteilhaft vorgesehen werden, daß die freien Enden bzw. Griffstücke jedes Bewegungshebels erste und zweite Markierungen aufweisen.

Trotz der wesentlich gesteigerten Einfachheit der Handhabung kann bei der Montage des Verbindungselements es geschehen, daß sich das Verbindungselement aufgrund der Schwerkraft von der gewünschten Position entfernt und/oder die Verankerungskörper sich vor der endgültigen Fixierung in ungewünschterweise verschwenken können. Um dies mit einfachen Mitteln zu verhindern, ist es vorteilhaft, wenn zwischen den beiden Halbschalen ein elastisches Element angeordnet ist, das sowohl auf die Halbschalen als auch auf die Verbindungsteile eine Druckkraft ausübt. Aufgrund der von dem elastischen Element ausgeübten Druckkraft sowohl auf die Verbindungsteile als auch auf die Halbschalen tritt bei der Montage des Verbindungselement vor dem Anziehen der Spannschraube eine gewisse Klemmwirkung auf, die im wesentlichen auf die Verbindungsteile wirkt und somit die Verankerungskörper durch leichten Druck auf den Grund der Längsnuten in Position hält. Danach kann dann auf ganz bequeme Weise mit Hilfe der Spannschraube das Verbindungselement festgesetzt werden.

Es gibt sicherlich eine Vielzahl von Ausgestaltungsmöglichkeiten für das elastische Element, besonders vorteilhaft ist aber, wenn das elastische Element aus Kunststoff besteht und eine Vielzahl von Hohlräumen aufweist.

Eine Weiterbildung der Erfindung ist gegeben durch ein Gehäuse mit Aufnahmeloch für die Spannschraube, in welchem die beiden Halbschalen vollständig und von den Verbindungsteilen jeweils die Spannvorsprünge aufgenommen sind. Dieses Gehäuse verbessert nicht nur das äußere Erscheinungsbild, sondern erleichtert auch noch die Handhabbarkeit des Verbindungselements.

Gemäß einer Weiterbildung der Erfindung ist dabei vorgesehen, daß das Gehäuse mit vorspringenden Stegen versehen ist, die ein gegenseitiges Berühren der Halbschalen verhindern. Diese Stege erhöhen zudem auch noch die Stabilität des Gehäuses und verhindern ein Verdrehen der Halbschalen, damit die Spannschraube bei der Vormontage noch einfacher eingeführt werden kann.

Ein besonders angenehmer optischer Eindruck ist dann gegeben, wenn das Gehäuse hohlzylinderförmig ausgebildet ist.

Vorteilhaft kann vorgesehen werden, daß das Verbindungselement aus Holz, Metall, Kunststoff oder aus einer beliebigen Kombination davon besteht.

Weitere Vorteile und Merkmale der Erfindung ergeben sich aus der folgenden Beschreibung eines Ausführungsbeispiels sowie aus den Zeichnungen, auf die Bezug genommen wird.

Es zeigen:
- Fig.1: eine Explosionsdarstellung des Ausführungs- beispiels;
- Fig.2a,b: zwei Ansichten des Gehäuses gem. Fig.1;
- Fig.3a-e: zwei Seitenansichten mit entsprechenden Schnittansichten sowie eine Draufsicht der Halbschalen;
- Fig.4a-d: zwei Seiten-, eine Draufsicht sowie eine Schnittansicht eines Verankerungsteils;
- Fig.5a-d: drei verschiedene Ansichten sowie eine Schnittansicht eines elastischen Elements;
- Fig.6a,b: zwei Ansichten eines Bewegungshebels; und
- Fig.7: eine Schnittansicht des verbindungselements gem. Fig.1 im montierten Zustand, wobei aus Übersichtlichkeitsgründen das elastische Element weggelassen wurde.

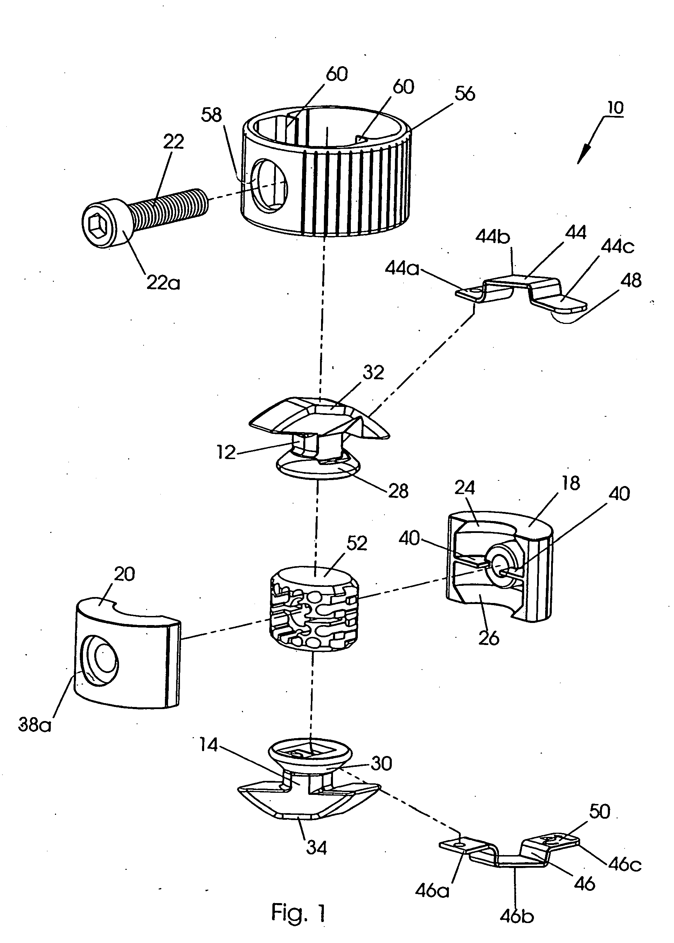

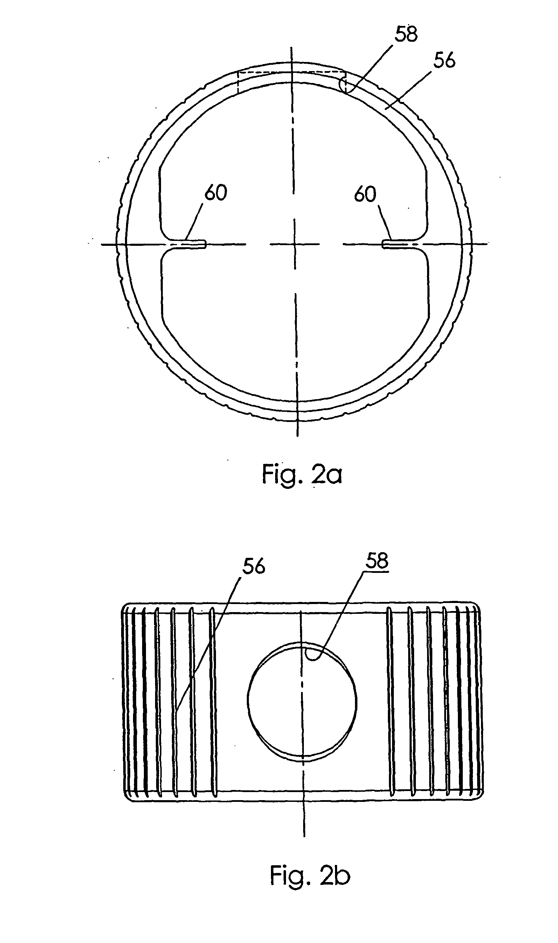

Anhand der Figuren 1 bis 7 wird nunmehr ein Ausführungsbeispiel eines Verbindungselementes 10 beschrieben, das für eine Verbindung zweier an ihren Außenflächen jeweils mindestens eine hinterschnittene Längsnut N aufweisender Profilstäbe P verwandt wird. Dabei beziehen sich gleiche Bezugsziffern auf gleiche Bauteile, sofern nichts anderes ausgesagt wird.

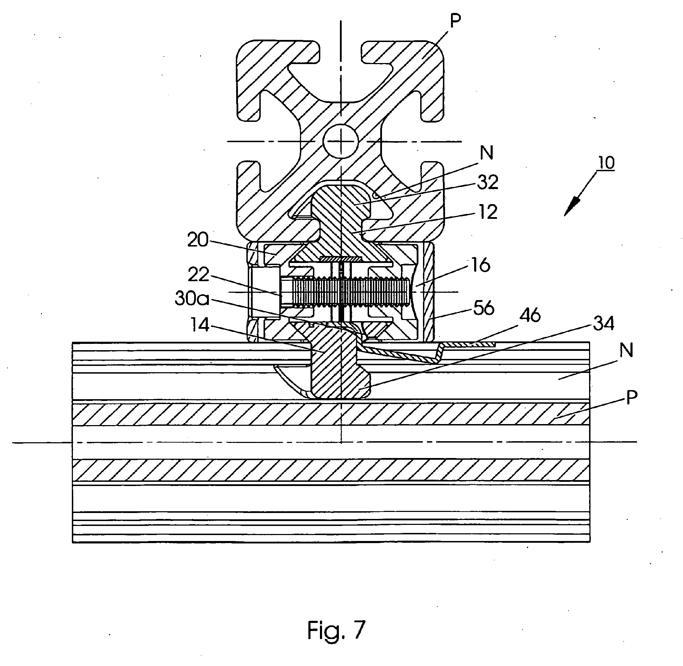

Das Verbindungselement 10 enthält erste und zweite Verbindungsteile 12 und 14, die einerseits in den Längsnuten N verankert werden können, und andererseits mit einer Spanneinrichtung 16, wie sie in Fig.7 angedeutet ist, festgeklemmt werden können.

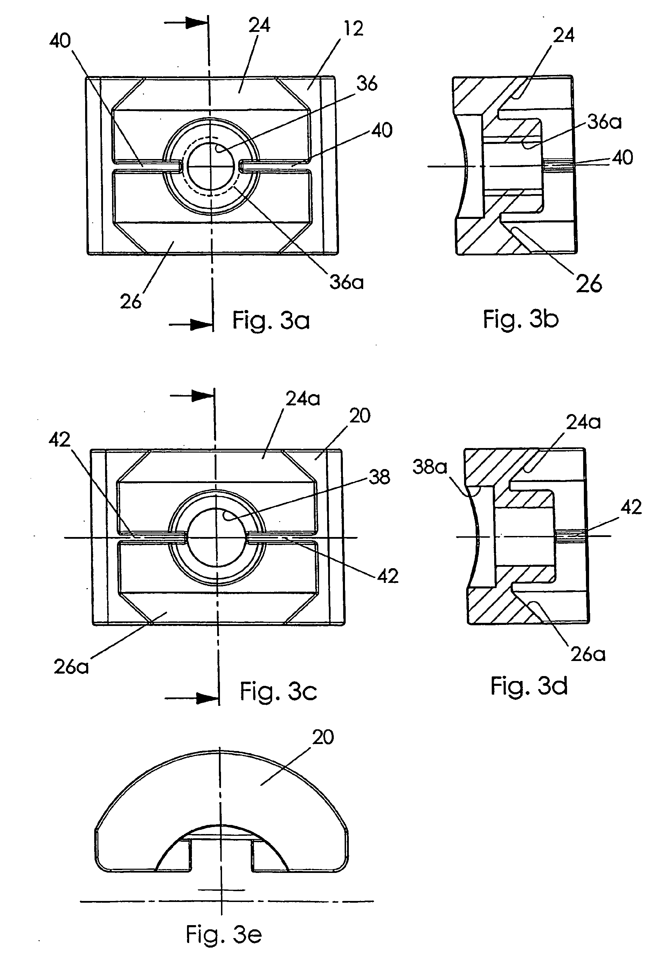

Die Spanneinrichtung 16 enthält erste und zweite Halbschalen 18 und 20, die, wie insbesondere in Fig.3e zu sehen, in diesem Fall halbzylinderförmig ausgebildet sind. Jede der beiden Halbschalen 18 und 20 weist jeweils erste und zweite einander entgegengesetzte Spannschrägen 24,26,24a,26a auf. Diese Spannschrägen 24,26,24a,26a wirken mit ersten und zweiten Spannvorsprüngen 28 und 30 zusammen, die diesen Spannschrägen 24,24a,26,26a entsprechend ausgeformt und an den beiden Verbindungsteilen 12 und 14 angeordnet sind.

Bei dem gezeigten Ausführungsbeispiel sind die Spannschrägen 24,24a,26,26a halbtrichterförmig ausgeformt, während die Spannvorsprünge 28 und 30 dementsprechend kegelstumpfförmig ausgeformt sind. Es ist aber auch möglich, was in den Figuren nicht gezeigt ist, die Halbschalen im Querschnitt rechteckförmig auszubilden und die Spannschrägen bzw. Spannvorsprünge ohne Krümmung also als ebene Schrägflächen auszubilden.

Die ersten und zweiten Verbindungsteile 12 und 14 weisen an der den Spannvorsprüngen 28 und 30 entgegengesetzten Seiten erste und zweite Verankerungskörper 32 und 34 auf. Diese Verankerungskörper 32 und 34 sind in den jeweiligen Längsnuten N der Profilstäbe P festsetzbar.

Damit diese Verankerungskörper 32 und 34 besonders einfach in die Längsnuten N eingesetzt werden können, ist jeder der Verankerungskörper 32 und 34 langgestreckt ausgebildet mit einer Breite, die geringer ist als die lichte weite der Öffnung der Längsnut N. Dadurch können die Verankerungskörper einfach in die Längsnuten N eingesetzt werden und können durch ein leichtes Verdrehen die Hinterschnitte der Längsnuten N hintergreifen.

Damit dies besonders einfach und definiert erfolgen kann, sind die Verankerungskörper 32 und 34 in Draufsicht mit einem parallelogrammförmigen Querschnitt versehen derart, daß nach einer leichten Drehung des Verbindungsteils zwei einander gegenüberliegende Seiten dieses Parallelogramms an den inneren Krümmungsflächen der Längsnuten N anliegen können.

Zur Erhöhung der Stabilität dieser Verankerungskörper 32 und 34 verlaufen diese zu ihren jeweiligen Enden hin konisch zu, so daß zur Aufnahme größerer Kräfte auch mehr Material zur Verfügung steht.

Die in diesem Ausführungsbeispiel halbzylinderförmig ausgebildeten Halbschalen 18 und 20 weisen zudem auch noch jeweils quer zum Zylindermantel verlaufende erste und zweite Aufnahmeöffnungen 36 und 38 für die Spannschraube 32 auf. Dabei ist die Aufnahmeöffnung 36 der ersten Halbschale 18 mit einem Innengewinde 36a und die Aufnahmeöffnung 38 der zweiten Halbschale 20 mit einer Absenkung 38a zur Aufnahme des Kopfes 22a der Spannschraube 22 versehen. Die Spannschraube 22 verläuft daher im eingebauten Zustand zwischen den ersten und zweiten Spannvorsprüngen 28 und 30 der Verbindungsteile 12 und 14.

Wie in Fig.1 und insbesondere in den Figuren 3a-e zu sehen, ist jede Halbschale 18 und 20 im Bereich der beiden Aufnahmeöffnungen 36 und 38 mit ersten und zweiten Verstärkungsstegen 40 und 42 versehen. Diese Verstärkungsstege 40 und 42 sind einerseits am Innenmantel der Zylinderförmigen Halbschalen 18 und 20 angeschlossen und liegen andererseits auch noch an den nach innen kragenden Abschnitten der die beiden Aufnahmeöffnungen 36 und 38 umgebenden Schalenteile an.

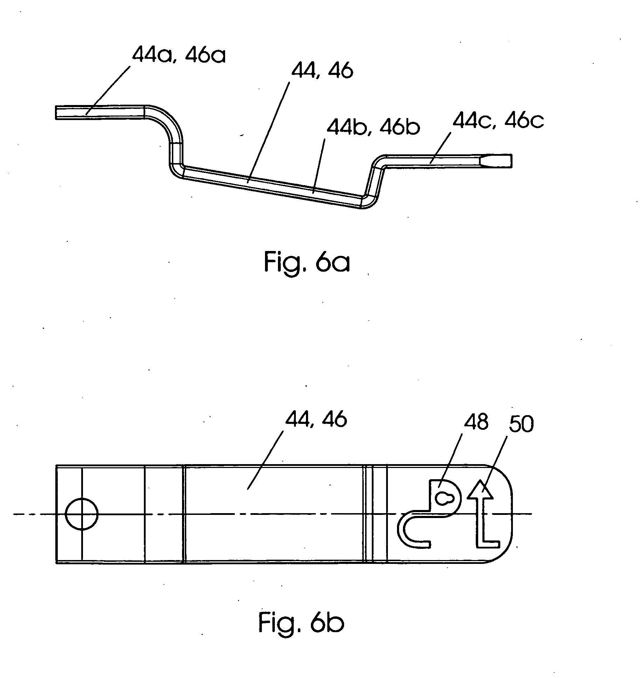

Damit die beiden Verbindungsteile 12 und 14 auch im vormontierten Zustand des Verbindungselements 10 einfach handhabbar sind, weisen diese beiden Verbindungsteile 12 und 14 erste und zweite Bewegungshebel 44 und 46 auf. Wie in den Figuren 6a und 6b gezeigt, sind die beiden Bewegungshebel 44 und 46 in Seitenansicht gesehen mehrfach gebogene vorzugsweise Metallstreifen, dessen Verlauf in etwa einem Querschnitt durch einen Teller entspricht. Dabei kann ein erstes bzw. zweites Endstück 44a,44b in einen im Bereich der Spannvorsprünge 28 und 30 angeordneten Schlitze 28a bzw. 30a eingesteckt werden, die am kleinsten Durchmesser der in diesem Falle kegelstumpfförmigen Spannvorsprünge 28 bzw. 30 beginnen und in einer Öffnung im Bereich des zum Inneren des Verbindungselements 10 weisenden Bodens dieser Spannvorsprünge 28 bzw. 30 angeordnete Öffnung enden. Dieses besagte Ende ist daher auch von dieser Seite des Spannvorsprungs 28 bzw. 30 sichtbar und kann mit Hilfe einer Schraube an den Verbindungsteilen 12 und 14 in diesem Falle lösbar befestigt werden.

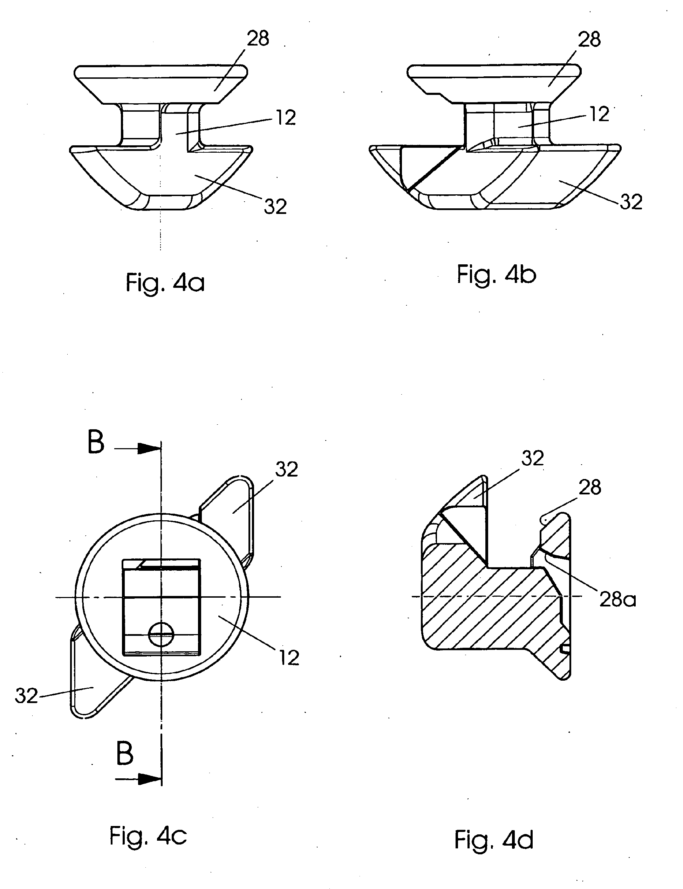

Diese Schraubverbindung ist in Fig.4c angedeutet. Das freie nicht befestigte Ende eines jeden Befestigungshebels 44 und 46 ist mit ersten und zweiten Markierungen 48 und 50 versehen. Diese Markierungen 48 und 50, die besonders gut in Fig.6b gezeigt sind, dienen in diesem gezeigten Fall dazu, die Bewegungsrichtung zum Öffnen bzw. Lösen der verbindungsteile 12 und 14, insbesondere der Verankerungskörper 32 und 34 aus dem jeweiligen Verankerungssitz anzugeben. Selbstverständlich ist damit zumindest indirekt auch die Schließbewegungsrichtung festgelegt.

Die derart an den entsprechenden Verbindungsteilen 12 und 14 befestigten Bewegungshebel 44 und 46 sind aufgrund der oben angegebenen Form derart ausgebildet, daß sie bei Einnahme der Festklemmposition der Verankerungskörper 32 und 34 der Verbindungsteile 12 und 14 in diese Nuten N verriegelnd eingreifen können. Dies ist besonders anschaulich in Fig. 7 dargestellt.

Die Bewegungshebel 44 und 46 bestehen daher aus den oben genannten Endstücken 44a und 46a, an die sich seitlich betrachtet erste und zweite U-förmige Mittelstücke 44b und 46b anschließen. An diese U-förmigen Mittelstücke 44b und 46b sind dann wiederum erste und zweite Griffstücke 44c und 46c angeordnet, die dann in der Verriegelungsstellung mit der Außenoberfläche der Profilstäbe P in etwa abschließen oder damit fluchten. Es wird daher bei diesem Ausführungsbeispiel das gesamte Mittelstück 44b bzw. 46b der Bewegungshebel 44 bzw. 46 in den Nuten N eintauchen. Lediglich die Griffstücke 44c bzw. 46c sind dann entweder mit Hilfe eines Fingers oder eines Werkzeugs leicht zugänglich und können dann in die gewünschte Position, in dem besagten Fall zum Öffnen bzw. Entriegeln der Verankerungskörper 32 bzw. 34, ergriffen und verschwenkt werden.

Des weiteren ist zwischen den beiden Halbschalen 18 und 20 sowie den Spannvorsprüngen 28 und 30 ein elastisches Element 52 angeordnet. Dieses elastische Element 52 ist so dimensioniert, daß es sowohl auf die Halbschalen 18 und 20, aber insbesondere auf die beiden Verbindungsteile 12 und 14 eine Druckkraft ausübt. Diese Druckkraft ist bei nicht vollständig zusammengeschraubten Halbschalen 18 und 20 ausreichend, die Verbindungsteile 12 und 14 in den Längsnuten N zu halten, wenn die Verankerungskörper 32 und 34 in ihre Befestigungsposition gedreht worden sind. Durch die leichte Klemmwirkung der Verankerungskörper 32 und 34 auf die Längsnuten N kann das Verbindungselement 10 in der gewünschten Position gehalten werden, ohne daß es sich selbstständig aus dieser Position weg entfernen kann, wenn die Spannschraube 22 noch nicht vollständig fest angezogen worden ist.

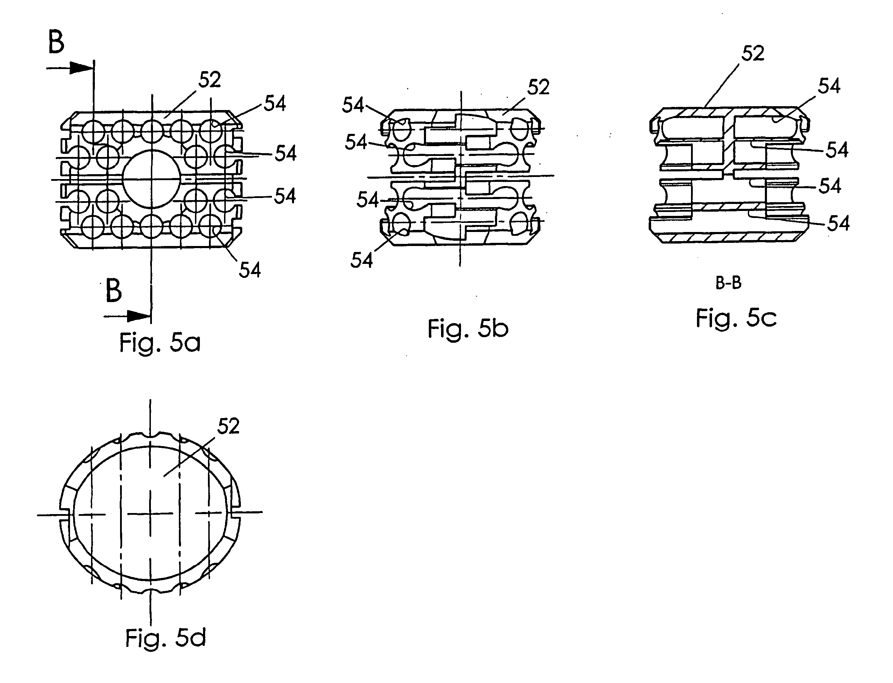

Wie insbesondere in den Figuren 5a bis 5d zu sehen, weist das elastische Element 52 neben einer nicht näher bezeichneten Durchgangsöffnung für die Spannschraube 22 eine Vielzahl von Hohlräumen 54 auf. Diese Hohlräume 54 dienen im wesentlichen einer Verbesserung der Elastizität dieses Elementes 52.

Die bis hierhin beschriebenen Bestandteile des Verbindungselements 10 sind für eine Verbindung zweier Profilstäbe P ausreichend. Im wesentlichen zur Verbesserung des optischen Erscheinungsbildes ist aber dennoch ein Gehäuse 56 vorgesehen, das ein Aufnahmeloch 58 für die Spannschraube. 22 aufweist. In diesem Gehäuse 56 werden die beiden Halbschalen 18 und 20 vollständig und von den Verbindungsteilen 12 und 14 jeweils die Spannvorsprünge 28 und 30 aufgenommen. Des weiteren ist das Gehäuse 56 mit vorspringenden Stegen 60 versehen, die ein gegenseitiges Berühren der beiden Halbschalen 18 und 20 verhindern.

Selbstverständlich kann das Gehäuse 56 eine an den Querschnitt der Profilstäbe P angepaßte Außenkontur aufweisen. Bei dem beschriebenen Ausführungsbeispiel ist das Gehäuse 56 hohlzylinderförmig ausgebildet und gegebenenfalls an der Aussenoberfläche mit Riffelungen oder ähnlichem versehen.

Als Material für das Verbindungselement kann sowohl Holz, Metall, Kunststoff oder eine beliebige Kombination davon verwandt werden.

Das erfindungsgemäße Verbindungselement 10 ermöglicht eine einfache, sichere und von dem Einbauzustand der zu verbindenden Profilstabe P unabhängige Verbindungsmöglichkeit für diese oben genannten Profilstäbe P.

### Bezugszeichenliste

- 10: Verbindungselement
- 12: erstes Verbindungsteil
- 14: zweites Verbindungsteil
- 16: Spanneinrichtung
- 18: erste Halbschale
- 20: zweite Halbschale
- 22: Spannschraube
- 22a: Kopf
- 24,24a: erste Spannschräge
- 26,26a: zweite Spannschräge
- 28: erster Spannvorsprung
- 28a: erster Schlitz
- 30: zweiter Spannvorsprung
- 30a: zweiter Schlitz
- 32: erster Verankerungskörper
- 34: zweiter Verankerungskörper
- 36: erste Aufnahmeöffnung
- 36a: Innengewinde
- 38: zweite Aufnahmeöffnung
- 38a: Absenkung
- 40: erster Verstärkungssteg
- 42: zweiter Verstärkungssteg
- 44: erster Bewegungshebel
- 44a: erstes Endstück
- 44b: erstes U-förmige Mittelstück
- 44c: erstes Griffstück
- 46: zweiter Bewegungshebel
- 46b: zweites U-förmiges Mittelstück
- 46c: zweites Griffstück
- 48: erste Markierung
- 50: zweite Markierung
- 52: elastisches Element
- 54: Hohlraum
- 56: Gehäuse
- 58: Aufnahmeloch
- 60: Steg
- N: Längsnut
- P: Profilstab

## Patentansprüche

1. Verbindungselement (10) für eine Verbindung zweier an ihren Außenflächen jeweils mindestens eine hinterschnittene Längsnut (N) aufweisender Profilstäbe (P), mit ersten und zweiten Verbindungsteilen (12,14), die in den Längsnuten (N) verankerbar sind, und mit einer Spanneinrichtung (16) zum Festklemmen der Verbindungsteile (12,14), **dadurch gekennzeichnet, dass** die Spanneinrichtung (16) erste und zweite Halbschalen (18,20) aufweist, die mittels einer Spannschraube (22) relativ zueinander bewegbar sind, die Halbschalen (18, 20) jeweils erste und zweite einander entgegengesetzte Spannschrägen (24,26,24a,26a) aufweisen, die mit diesen Spannschrägen (24,26,24a,26a) entsprechend ausgeformten und an den Verbindungsteilen (12,14) angeordneten ersten und zweiten Spannvorsprüngen (28,30) zusammenwirken, wobei mit gelöster Spannschraube (22) die Spanneinrichtung (16) relativ zu den ersten und zweiten Verbindungsteilen (12,14) verdrehbar ist.

2. Verbindungselement (10) nach Anspruch 1, **dadurch gekennzeichnet, daß** die ersten und zweiten Verbindungsteile (12,14) erste und zweite Verankerungskörper (32, 34) aufweisen, die in den jeweiligen Längsnuten (N) festsetzbar sind.

3. Verbindungselement (10) nach Anspruch 2, **dadurch gekennzeichnet, daß** jeder Verankerungskörper (32,34) langgestreckt ausgebildet ist mit einer Breite, die geringer ist als die Lichtweite der Öffnung der Längsnut (N).

4. Verbindungselement (10) nach Anspruch 2 oder 3, **dadurch gekennzeichnet, daß** jeder Verankerungskörper (32,34) in Draufsicht einen parallelogrammförmigen Querschnitt aufweist.

5. Verbindungselement (10) nach einem der Ansprüche 2 bis 4, **dadurch gekennzeichnet, daß** jeder Verankerungskörper (32,34) zu seinen jeweiligen Enden hin konisch zuläuft.

6. Verbindungselement (10) nach einem der Ansprüche 1 bis 5, **dadurch gekennzeichnet, daß** die Halbschalen (18,20) jeweils halbzylinderförmig ausgebildet sind und jeweils quer zum Zylindermantel verlaufende erste und zweite Aufnahmeöffnungen (36,38) für die Spannschraube (22) aufweisen.

7. Verbindungselement (10) nach Anspruch 6, **dadurch gekennzeichnet, daß** die Aufnahmeöffnung (36) der ersten Halbschale (18) mit einem Innengewinde (36a) und die Aufnahmeöffnung (38) der zweiten Halbschale (20) mit einer Absenkung (38a) zur Aufnahme des Kopfes (22a) der Spannschraube (22) versehen sind.

8. Verbindungselement (10) nach Anspruch 6 oder 7, **dadurch gekennzeichnet, daß** jede Halbschale (18,20) im Bereich der Aufnahmeöffnung (36,38) mit ersten und zweiten Verstärkungsstegen (40,42) versehen ist.

9. Verbindungselement (10) nach einem der Ansprüche 1 bis 8, **dadurch gekennzeichnet**, das jedes Verbindungsteil (12,14) mit ersten und zweiten Bewegungshebeln (44,46) versehen ist, die fest oder lösbar angeordnet sind.

10. Verbindungselement (10) nach Anspruch 9, **dadurch gekennzeichnet, daß** die Bewegungshebel (44,46) mit entsprechenden ersten und zweiten Endstücken (44a,46a) an den aufeinander zuweisenden Abschnitten der Verbindungsteile (12,14) angeordnet sind und derart geformt und ausgebildet sind, daß sie bei Einnahme der Festklemmposition der Verbindungsteile (12,14) in den Nuten (N) verriegelnd eingreifen.

11. Verbindungselement nach Anspruch 10, **dadurch gekennzeichnet, daß** sich an den entsprechenden Endstücken (44a,46a) seitlich betrachtet erste und zweite U-förmige Mittelstücke (44b,46b) anschließen, an denen wiederum sich erste und zweite Griffstücke (44c,46c) anschließen, die in der Verriegelungsstellung mit der Außenoberfläche der Profilstäbe (P) in etwa abschließen oder fluchten.

12. Verbindungselement nach Anspruch 10 oder 11, **dadurch gekennzeichnet, daß** die Endstücke (44a,46a) durch an den Verbindungsteilen (12,14) vorhandenen ersten und zweiten Schlitzen (28a,30a) eingesteckt sind.

13. Verbindungselement (10) nach einem der Ansprüche 9-12, **dadurch gekennzeichnet, daß** die freien Enden bzw. Griffstücke (44c,46c) jedes Bewegungshebels (44,46) erste und zweite Markierungen (48,50) aufweisen.

14. Verbindungselement (10) nach einem der Ansprüche 1 bis 13, **dadurch gekennzeichnet, daß** zwischen den beiden Halbschalen (18,20) ein elastisches Element (52) angeordnet ist, das sowohl auf die Halbschalen (18,20) als auch auf die Verbindungsteile (12,14) eine Druckkraft ausübt.

15. Verbindungselement (10) nach Anspruch 14, **dadurch gekennzeichnet, daß** das elastische Element (52) aus Kunststoff besteht und eine Vielzahl von Hohlräumen (54) aufweist.

16. Verbindungselement (10) nach einem der Ansprüche 1 bis 15, **gekennzeichnet durch** ein Gehäuse (56) mit Aufnahmeloch (58) für die Spannschraube (22), in welchem die beiden Halbschalen (18,20) vollständig und von den Verbindungsteilen (12,14) jeweils die Spannvorsprünge (28,30) aufgenommen sind.

17. Verbindungselement (10) nach Anspruch 16, **dadurch gekennzeichnet, daß** das Gehäuse (56) mit vorspringenden Stegen (60) versehen ist, die ein gegenseitiges Berühren der Halbschalen (18,20) verhindern.

18. Verbindungselement (10) nach Anspruch 16 oder 17, **dadurch gekennzeichnet, daß** das Gehäuse (56) hohlzylinderförmig ausgebildet ist.

19. Verbindungselement (10) nach einem der Ansprüche 1 bis 18, **dadurch gekennzeichnet, daß** es aus Holz, Metall, Kunststoff oder aus einer beliebigen Kombination davon besteht.

## Claims

1. Connection element (10) for the connection of two profiled rods (P) each comprising on their outer surfaces at least one undercut longitudinal groove (N), having first and second connection parts (12, 14) which can be anchored in the longitudinal grooves (N), and having a clamping device (16) for clamping the connection parts (12, 14), **characterised in that** the clamping device (16) comprises first and second half shells (18, 20) which can be moved relative to each other by means of a clamping screw (22), the half shells (18, 20) each comprise first and second mutually opposed clamping bevels (24, 26, 24a, 26a) which cooperate with first and second clamping projections (28, 30) which are formed so as to correspond to these clamping bevels (24, 26, 24a, 26a) and disposed on the connection parts (12, 14), wherein the clamping device (16) can be rotated relative to the first and second connection parts (12, 14) by means of a loosened clamping screw (22).

2. Connection element (10) as claimed in claim 1, **characterised in that** the first and second connection parts (12, 14) comprise first and second anchoring bodies (32, 34) which can be fixed in the respective longitudinal grooves (N).

3. Connection element (10) as claimed in claim 2, **characterised in that** each anchoring body (32, 34) is elongated in formation having a width which is less than the inside width of the opening in the longitudinal groove (N).

4. Connection element (10) as claimed in claim 2 or 3, **characterised in that** each anchoring body (32, 34) comprises in plan view a parallelogram-shaped cross-section.

5. Connection element (10) as claimed in any one of claims 2 to 4, **characterised in that** each anchoring body (32, 34) tapers conically towards its respective ends.

6. Connection element (10) as claimed in any one of claims 1 to 5, **characterised in that** the half shells (18, 20) are each formed in the shape of a half cylinder and each comprise first and second receiving openings (36, 38) for the clamping screw (22) which extend transversely with respect to the cylinder periphery.

7. Connection element (10) as claimed in claim 6, **characterised in that** the receiving opening (36) of the first half shell (18) is provided with an internal thread (36a) and the receiving opening (38) of the second half shell (20) is provided with a depression (38a) to receive the head (22a) of the clamping screw (22).

8. Connection element (10) as claimed in claim 6 or 7, **characterised in that** each half shell (18, 20) is provided in the region of the receiving opening (36, 38) with first and second reinforcing webs (40, 42).

9. Connection element (10) as claimed in any one of claims 1 to 8, **characterised in that** each connection part (12, 14) is provided with first and second movement levers (44, 46) which are disposed in a fixed or releasable manner.

10. Connection element (10) as claimed in claim 9, **characterised in that** the movement levers (44, 46) are disposed with corresponding first and second end pieces (44a, 46a) on the mutually facing portions of the connection parts (12, 14) and are shaped and formed in such a manner that they engage in a locking manner in the grooves (N) when the clamping position of the connection parts (12, 14) is assumed.

11. Connection element as claimed in claim 10, **characterised in that** as seen laterally the corresponding end pieces (44a, 46a) are adjoined by first and second U-shaped middle pieces (44b, 46b), which in turn are adjoined by first and second gripping pieces (44c, 46c) which approximately terminate or are aligned in the locking position with the outer surface of the profiled rods (P).

12. Connection element as claimed in claim 10 or 11, **characterised in that** the end pieces (44a, 46a) are inserted through first and second slots (28a, 30a) provided on the connection parts (12, 14).

13. Connection element (10) as claimed in any one of claims 9-12, **characterised in that** the free ends or gripping pieces (44c, 46c) of each movement lever (44, 46) comprise first and second markings (48, 50).

14. Connection element (10) as claimed in any one of claims 1 to 13, **characterised in that** disposed between the two half shells (18, 20) is a resilient element (52) which exerts a compressive force both upon the half shells (18, 20) and upon the connection parts (12, 14).

15. Connection element (10) as claimed in claim 14, **characterised in that** the resilient element (52) consists of synthetic material and comprises a plurality of cavities (54).

16. Connection element (10) as claimed in any one of claims 1 to 15, **characterised by** a housing (56) having a receiving hole (58) for the clamping screw (22), in which the two half shells (18, 20) are received completely, and in each case the clamping projections (28, 30) are received by the connection parts (12, 14).

17. Connection element (10) as claimed in claim 16, **characterised in that** the housing (56) is provided with projecting webs (60) which prevent the half shells (18, 20) from contacting one another.

18. Connection element (10) as claimed in claim 16 or 17, **characterised in that** the housing (56) is formed in the shape of a hollow cylinder.

19. Connection element (10) as claimed in any one of claims 1 to 18, **characterised in that** it consists of wood, metal, synthetic material or of any combination thereof.

## Revendications

1. Élément de raccordement (10) pour le raccordement de deux barres profilées (P) qui présentent sur leurs surfaces extérieures au moins une rainure longitudinale contre-dépouillée (N), avec des première et seconde pièces de raccordement (12, 14) qui sont aptes à être ancrées dans les rainures longitudinales (N), et avec un dispositif de serrage (16) pour bloquer les pièces de raccordement (12, 14), **caractérisé en ce que** le dispositif de serrage (16) présente des première et seconde demi-coques (18, 20) qui sont mobiles l'une par rapport à l'autre à l'aide d'une vis de serrage (22), les demi-coques (18, 20) présentent des premiers et seconds biseaux de serrage (24, 26, 24a, 26a) opposés qui coopèrent avec des première et seconde saillies de serrage (28, 30) de forme correspondant à ces biseaux de serrage (24, 26, 24a, 26a) et disposées sur les pièces de raccordement (12, 14), étant précisé que quand la vis de serrage (22) est desserrée, le dispositif de serrage (16) est apte à tourner par rapport aux première et seconde pièces de raccordement (12, 14).

2. Élément de raccordement (10) selon la revendication 1, **caractérisé en ce que** les première et seconde pièces de raccordement (12, 14) présentent des premier et second corps d'ancrage (32, 34) qui sont aptes à être immobilisés dans les rainures longitudinales (N) respectives.

3. Élément de raccordement (10) selon la revendication 2, **caractérisé en ce que** chaque corps d'ancrage (32, 34) a une forme allongée, avec une largeur qui est inférieure à la largeur intérieure de l'ouverture de la rainure longitudinale (N).

4. Élément de raccordement (10) selon la revendication 2 ou 3, **caractérisé en ce que** chaque corps d'ancrage (32, 34), vu de dessus, présente une coupe transversale en forme de parallélogramme.

5. Élément de raccordement (10) selon l'une des revendications 2 à 4, **caractérisé en ce que** chaque corps d'ancrage (32, 34) a une forme effilée en cône vers chacune de ses extrémités.

6. Élément de raccordement (10) selon l'une des revendications 1 à 5, **caractérisé en ce que** les demi-coques (18, 20) ont chacune la forme d'un demi-cylindre et présentent respectivement des première et seconde ouvertures de réception (36, 38), qui s'étendent transversalement par rapport à l'enveloppe du cylindre, pour la vis de serrage (22).

7. Élément de raccordement (10) selon la revendication 6, **caractérisé en ce que** l'ouverture de réception (36) de la première demi-coque (18) est pourvue d'un filetage intérieur (36a), et l'ouverture de réception (38) de la seconde demi-coque (20) est pourvue d'une partie fraisée (38a) pour recevoir la tête (22a) de la vis de serrage (22).

8. Élément de raccordement (10) selon la revendication 6 ou 7, **caractérisé en ce que** chaque demi-coque (18, 20) est pourvue, dans la zone de l'ouverture de réception (36, 38), de premières et secondes arêtes de renforcement (40, 42).

9. Élément de raccordement (10) selon l'une des revendications 1 à 8, **caractérisé en ce que** chaque pièce de raccordement (12, 14) est pourvue de premier et second leviers de déplacement (44, 46) qui sont disposés de manière fixe ou amovible.

10. Élément de raccordement (10) selon la revendication 9, **caractérisé en ce que** les leviers de déplacement (44, 46) sont disposés avec des première et seconde parties d'extrémité (44a, 46a) correspondantes sur des parties, dirigées l'une vers l'autre, des pièces de raccordement (12, 14) et sont formés et conçus de manière à pénétrer et à être verrouillés dans les rainures (N) quand les pièces de raccordement (12, 14) adoptent la position bloquée.

11. Élément de raccordement (10) selon la revendication 10, **caractérisé en ce qu'**il est prévu dans le prolongement des parties d'extrémité (44a, 46a) correspondantes, vues de côté, des première et seconde parties centrales en U (44b, 46b) qui se prolongent elles-mêmes par des première et seconde parties d'enclenchement (44c, 46c) qui, dans la position de verrouillage, bordent à peu près la surface extérieure des barres profilées (P) ou sont à peu près dans l'alignement de celle-ci.

12. Élément de raccordement (10) selon la revendication 10 ou 11, **caractérisé en ce que** les parties d'extrémité (44a, 46a) passent à travers des première et seconde fentes (28a, 30a) prévues sur les pièces de raccordement (12, 14).

13. Élément de raccordement (10) selon l'une des revendications 9 à 12, **caractérisé en ce que** les extrémités libres ou parties d'enclenchement (44c, 46c) de chaque levier de déplacement (44, 46) présentent des premier et second marquages (48, 50).

14. Élément de raccordement (10) selon l'une des revendications 1 à 13, **caractérisé en ce qu'**il est prévu entre les deux demi-coques (18, 20) un élément élastique (52) qui exerce une force de pression à la fois sur les demi-coques (18, 20) et sur les pièces de raccordement (12, 14).

15. Élément de raccordement (10) selon la revendication 14, **caractérisé en ce que** l'élément élastique (52) se compose de matière plastique et présente une multiplicité de cavités (54).

16. Élément de raccordement (10) selon l'une des revendications 1 à 15, **caractérisé par** une enveloppe (56) qui est pourvue d'un trou de réception (58) pour la vis de serrage (22) et dans laquelle les deux demi-coques (18, 20) sont entièrement logées ainsi que les saillies de serrage (28, 30) des pièces de raccordement (12, 14).

17. Élément de raccordement (10) selon la revendication 16, **caractérisé en ce que** l'enveloppe (56) est pourvue d'arêtes saillantes (60) qui empêchent que les demi-coques (18, 20) se touchent.

18. Élément de raccordement (10) selon la revendication 16 ou 17, **caractérisé en ce que** l'enveloppe (56) a la forme d'un cylindre creux.

19. Élément de raccordement (10) selon l'une des revendications 1 à 18, **caractérisé en ce qu'**il se compose de bois, de métal, de matière plastique ou de n'importe quelle combinaison de ceux-ci.
